# EUROPÄISCHE PATENTANMELDUNG

(11) **EP 4 844 356 A1**
(43) Veröffentlichungstag der Anmeldung: **25.11.2026**
(21) Anmeldenummer: 26174160.7
(22) Anmeldetag: 23.04.2026
(51) Int. Cl.: G01L 5/103, B65G 23/44, B65G 43/02, G01L 1/22

(54) **MESSEINHEIT, SPANNVORRICHTUNG SOWIE VERTEIL- UND/ODER PRODUKTIONSZENTRUM**

(30) Priorität: 22.05.2025 DE 102025119961
(71) Anmelder: Baumer Electric AG, 8500 Frauenfeld (CH)
(72) Erfinder: Brönnimann, Stefan, 8370 Sirnach (CH); Jürgens, Alexander, 8500 Frauenfeld (CH); Geyer, Jasha, 78467 Konstanz (DE); Christian, Franzke, 78359 Orsingen-Nenzingen (DE)
(74) Vertreter: Strauss, Steffen

(57) **Zusammenfassung**

Die vorliegende Erfindung betrifft eine Messeinheit zum Messen einer Zugkraft, mit einer Trägereinheit, aufweisend eine Innenbohrung, die sich von einem ersten Ende zu einem zweiten Ende geradlinig erstreckt und die so dimensioniert ist, dass in einem Messzustand die Zugmittel innerhalb der Innenbohrung spielbehaftet aufnehmbar sind, einen am ersten Ende ausgebildeten Krafteintragsabschnitt, der so ausgebildet ist, dass im Messzustand die Zugkraft von den Zugmitteln in die Trägereinheit einkoppelbar ist, einen am zweiten Ende ausgebildeten Kraftabgabeabschnitt, der so ausgebildet ist, dass im Messzustand die Zugkraft von der Trägereinheit auf die Haltemittel übertragbar ist, einen zwischen dem Krafteintragsabschnitt und dem Kraftabgabeabschnitt ausgebildeten Messabschnitt, der entlang der axialen Achse elastisch verformbar ausgebildet ist, derart, dass eine Änderung eines Dehnungszustands des Messabschnitts längs der axialen Achse durch ein Sensorausgangssignal zum Abbilden der Zugkraft darstellbar ist, einen ersten Konusabschnitt, der die Innenbohrung am ersten Ende aufweitet und zur kraftund/oder formschlüssigen Aufnahme eines ersten sphärischen Kraftrichtelements ausgebildet ist, sowie dem ersten Kraftrichtelement, das zur Trägereinheit lösbar ausgebildet ist und einen sphärischen Kontaktbereich umfasst, wobei das erste Kraftrichtelement so ausgebildet ist, dass im Messzustand die Zugkraft der Zugmittel über den Kontaktbereich in den Konusabschnitt längs zur axialen Achse einkoppelbar ist, um die Trägereinheit hinsichtlich der Haltemittel auszurichten.

## Beschreibung

Die vorliegende Erfindung betrifft eine Messeinheit gemäß Anspruch 1. Ferner betrifft die vorliegende Erfindung eine Spannvorrichtung nach Anspruch 7 und ein Verteil- und/oder Produktionszentrum nach Anspruch 10.

Aus dem Stand der Technik ist eine Messeinheit zum Erfassen einer Kraft, die zwischen Zugmitteln und Haltemitteln wirkt, allgemein bekannt. Die bekannte Messeinheit umfasst einen Messabschnitt, der an zwei gegenüberliegenden Enden einen Krafteintragsabschnitt und einen Kraftabgabeabschnitt umfasst. Der Krafteintragsabschnitt ist zum Zusammenwirken mit den Zugmitteln ausgebildet, derart, dass die Zugkraft von den Zugmitteln auf den Krafteintragsabschnitt und somit auf die Messeinheit übertragbar ist. Der Kraftabgabeabschnitt ist so ausgebildet, dass die Zugkraft von der Messeinheit in die Haltemittel übertragbar ist. Ferner ist der Messabschnitt so ausgebildet, dass die Zugkraft sensortechnisch erfassbar ist. Hierfür ist der Messabschnitt mehrteilig ausgebildet, um eine Änderung in der Relativposition zwischen den einzelnen Teilen zum Abbilden der Zugkraft sensortechnisch zu erfassen.

Bei den bisher bekannten Messeinheiten ist von Nachteil, dass sich die relative Lage und/oder die Beschaffenheit der Zugmittel und der Haltemittel negativ auf den Messabschnitt auswirken kann, was sich auf die Messgenauigkeit dieser Messeinheiten nachteilig auswirkt. Bieten die Haltemittel somit keine Krafteintragsfläche an, die senkrecht zur Zugkraft verläuft, sondern die aufgrund eines Toleranzwinkels von ungleich null zu einer Querebene verschwenkt ausgebildet ist, entsteht bei bekannten Messeinheiten Messfehler.

Folglich liegt der vorliegenden Erfindung die Aufgabe zugrunde, die aus dem Stand der Technik bekannten Nachteile zu überwinden. Bevorzugt ist es die Aufgabe der vorliegenden Erfindung, eine Messeinheit anzugeben, die trotz eines Toleranzwinkels ungleich null dazu eingerichtet ist, eine Zugkraft mit hoher Messgenauigkeit zu erfassen. Bevorzugt ist es in Bezug auf eine intelligente Spannvorrichtung die Aufgabe der vorliegenden Erfindung, eine Spannvorrichtung und/oder ein Verteil- und/oder Produktionszentrum anzugeben, die dazu eingerichtet ist, die erzeugte Zugkraft sensortechnisch mit hoher Genauigkeit zu erfassen.

Diese Aufgabe wird durch eine erfindungsgemäße Messeinheit gemäß Anspruch 1 gelöst. Ferner wird die Aufgabe durch eine erfindungsgemäße Spannvorrichtung nach Anspruch 7 sowie ein Verteil- und/oder Produktionszentrum nach Anspruch 10 gelöst.

Die erfindungsgemäße Messeinheit ist zum Messen einer Zugkraft, die entlang einer axialen Richtung zwischen Zugmitteln und Haltemitteln wirkt, ausgebildet.

Die erfindungsgemäße Messeinheit umfasst eine rohrförmige Trägereinheit sowie ein erstes Kraftrichtelement, das zur Trägereinheit lösbar und/oder als ein separates Bauteil ausgebildet ist.

Die erfindungsgemäße Trägereinheit umfasst eine Innenbohrung, die sich zwischen einem ersten Ende der Trägereinheit und einem zweiten Ende der Trägereinheit entlang einer axialen Achse und somit entlang einer Geraden erstreckt. Anders ausgedrückt, die Trägereinheit ist von der Innenbohrung vollständig durchzogen, wobei die Innenbohrung geradlinig ausgebildet ist und die Trägereinheit in Bezug auf eine Längserstreckung vollständig durchsetzt.

Die Innenbohrung ist innerhalb der Trägereinheit so ausgebildet, dass die Zugmittel innerhalb der Innenbohrung zumindest in einem Messzustand der erfindungsgemäßen Messeinheit spielbehaftet aufnehmbar sind.

Spielbehaftet aufnehmbar bedeutet im Rahmen der vorliegenden Erfindung, dass zumindest im Messzustand zwischen den Zugmitteln und der Innenbohrung ein Spiel und/oder ein Mindestabstand besteht. Das heißt, dass zwischen der äußeren Begrenzung des Zugmittels, beispielsweise einer Gewindestange, und der inneren Begrenzung der Innenbohrung, die insbesondere durch einen kreisförmigen, länglichen Hohlraum in Form eines Tunnels ausgebildet ist, zumindest ein erwünschter Mindestabstand besteht. Es kommt somit nur im erfindungsgemäßen Krafteintragsabschnitt zu einer mechanischen Kontaktierung zwischen den Zugmitteln und der Trägereinheit, um die Zugkraft nur in diesem Bereich von den Zugmitteln auf die Trägereinheit zu übertragen.

Anders ausgedrückt, das Höchstmaß der Zugmittel fällt in Bezug zu einer Quer- und/oder Radialrichtung immer kleiner aus als das Mindestmaß der Innenbohrung.

Ferner umfasst die erfindungsgemäße Trägereinheit einen am ersten Ende ausgebildeten Krafteintragsabschnitt, der so ausgestaltet ist, dass im Messzustand die Zugkraft von den Zugmitteln in die Trägereinheit einkoppelbar ist sowie einen am zweiten Ende der Trägereinheit ausgebildeten Kraftabgabeabschnitt, der so ausgebildet ist, dass im Messzustand die Zugkraft von der Trägereinheit auf die Haltemittel übertragbar ist.

Zudem umfasst die erfindungsgemäße Trägereinheit einen Messabschnitt, der zwischen dem Krafteintragsabschnitt und dem Kraftabgabeabschnitt ausgebildet ist und der entlang der axialen Achse so elastisch verformbar ausgestaltet ist, dass eine Änderung des Dehnungszustands des Messabschnitts entlang der axialen Achse sensortechnisch erfassbar und somit durch ein Sensorausgangssignal zum Abbilden der Zugkraft darstellbar ist.

Beim Sensorausgangssignal handelt es sich insbesondere um ein analoges Sensorausgangssignal, bevorzugt eine Messspannung zwischen 0 bis 15V besonders bevorzugt zwischen 0 und 5V. Alternativ kann es sich bei dem Sensorausgangssignal auch um ein digitales Messignal handeln.

Weiterhin umfasst die erfindungsgemäße Trägereinheit einen ersten Konusabschnitt, der die Innenbohrung am ersten Ende umfangsseitig aufweitet und zur kraft- und/oder formschlüssigen Aufnahme eines ersten sphärischen Kraftrichtelements ausgebildet ist.

Das bereits erwähnte erste Kraftrichtelement umfasst einen sphärischen Kontaktbereich. Das erfindungsgemäße erste Kraftrichtelement ist so ausgebildet, dass im Messzustand die Zugkraft zunächst vom Zugmittel auf das erste Kraftrichtelement übertragbar ist und über den Kontaktbereich des ersten Kraftrichtelements in den ersten Konusabschnitt einkoppelbar ist. Erfindungsgemäß vorteilhaft hat dies zur Folge, dass die Trägereinheit und somit im Wesentlichen auch die erfinderische Messeinheit, in Bezug auf die Haltemittel ausgerichtet wird, wobei sich die Zugkraft aufgrund der spielbehafteten Aufnahme der Zugmittel ungestört und/oder umlenkungsfrei und somit das Zugmittel frei, insbesondere geradlinig, ausrichten kann.

Die erfindungsgemäße Trägereinheit, die eine rohrförmige und/oder hülsenförmige Ausgestaltung aufweist, und neben der, insbesondere tunnelartigen, Innenbohrung den Krafteintragsabschnitt, den Kraftabgabeabschnitt sowie den Messabschnitt umfasst, ist insbesondere als ein monolithisches und/oder einstückiges Bauteil ausgebildet.

Der in Folge der Zugkraft elastisch verformbare Messabschnitt ist bevorzugt entweder durch eine konstruktive Ausgestaltung der Trägereinheit, also etwa einer Materialdicke im Messabschnitt oder durch eine Materialwahl im Messabschnitt, ausgebildet, der sich dann entsprechend einer Materialdicke oder einer Materialwahl des Krafteintragungsabschnitts bzw. des Kraftabgabeabschnitts unterscheidet. Der Krafteintragsabschnitt und der Kraftabgabeabschnitt sind somit im Wesentlichen und insbesondere im Hinblick auf den Messabschnitt, starr ausgebildet.

Ferner wird darauf hingewiesen, dass der erfindungsgemäße Krafteintragsabschnitt insbesondere dazu ausgebildet ist, die Zugmittel, bevorzugt eine Gewindestange oder eine Schraube, besonders bevorzugt eine Gewindestange ≤M16 oder eine Schraube ≤M16, zu fixieren.

Im Messzustand ist die erfindungsgemäße Trägereinheit und somit die erfindungsgemäße Messeinheit also in Bezug auf das Haltemittel ausgerichtet.

Vorteilhafte Weiterbildungen der Erfindung sind in den Unteransprüchen beschrieben. In den Rahmen der Erfindung fallen sämtliche Kombinationen aus zumindest zwei von in der Beschreibung, den Ansprüchen und/oder den Figuren offenbarten Merkmalen.

Bei einer bevorzugten Ausführungsform der vorliegenden erfindungsgemäßen Messeinheit umfasst die Trägereinheit einen zweiten Konusabschnitt, der die Innenbohrung am zweiten Ende umfangsseitig aufweitet. Der zweite Konusabschnitt ist zur kraft- und/oder formschlüssigen Aufnahme eines zweiten sphärischen Kraftrichtelements ausgebildet.

Ferner ist es in diesem Zusammenhang vorgesehen, dass die erfindungsgemäße Messeinheit das zweite Kraftrichtelement umfasst, das - in Übereinstimmung zum ersten Kraftrichtelement - durch ein separates Bauteil ausgebildet ist. Das zweite Kraftrichtelement ist somit zur Trägereinheit lösbar ausgebildet. Ferner umfasst das zweite Kraftrichtelement umfasst einen zweiten sphärischen Kontaktbereich.

Der erste bzw. zweite sphärische Kontaktbereich ist insbesondere durch eine nach Außen gekrümmte Fläche, bevorzugt in der Form eines Kegels oder einer Kugel, insbesondere einer Halbkugel, ausgebildet.

Ferner ist das zweite Kraftrichtelement so ausgebildet, dass im Messzustand die Zugkraft von der erfindungsgemäßen Trägereinheit auf das zweite Kraftrichtelement und vom zweiten Kraftrichtelement auf die Haltemittel übertragbar ist. Auf vorteilhafte Weise wird die axiale Achse der Trägereinheit und/oder die Innenbohrung somit entlang der axialen Richtung der Zugkraft ausgerichtet.

Weiterbildend ist es vorgesehen, dass der Messabschnitt im Vergleich zu dem Krafteintragsabschnitt und/oder dem Kraftabgabeabschnitt eine reduzierte Wandstärke und/oder Wanddicke und/oder, insbesondere ringförmige, Querschnittsfläche aufweist. Anders ausgedrückt, die Querschnittsfläche der rohrförmigen Trägereinheit ist im Messabschnitt im Vergleich zum Krafteintragsabschnitt und/oder zum Kraftabgabeabschnitt reduziert.

Die Wandstärke und/oder die Wanddicke der Trägereinheit verläuft senkrecht zur axialen Richtung und/oder ist entlang einer radialen Richtung der rohrförmigen Trägereinheit ausgerichtet.

In diesem Zusammenhang ist es zudem bevorzugt vorgesehen, wenn die Wandstärke im Messabschnitt und/oder die Querschnittsfläche des Messabschnitts in Abhängigkeit eines Kraftmessbereichs der Zugkraft dimensioniert ist. Auf vorteilhafte Weise lässt sich die erfindungsgemäße Messeinheit somit an unterschiedliche Anwendungen und/oder unterschiedliche Kraftmessbereiche anpassen.

Zum Überwachen von großen Zugkräften, insbesondere im Bereich zwischen 0N bis 120kN, um insbesondere mit einer M16-Gewindestange oder einer M16-Schraube als Zugmittel zusammenzuwirken, eignet sich somit eine erfindungsgemäße Messeinheit mit einer ersten Trägereinheit mit großer Wandstärke, die mit einer ringförmigen Querschnittsfläche von ≤160mm² korrespondiert und/oder eine solche ausbildet.

Zum Überwachen von kleinen Zugkräften im Bereich zwischen 0N bis 40kN, um insbesondere mit einer M8-Gewindestange oder einer M8-Schraube als Zugmittel zusammenzuwirken, eignet sich eine erfindungsgemäße Messeinheit mit einer zweiten Trägereinheit mit vergleichsweiser kleiner Wandstärke, die mit einer ringförmigen Querschnittsfläche von ≤40mm² korrespondiert und/oder eine solche ausbildet. Auf vorteilhafter Weise deckt die erfindungsgemäße Messeinheit somit ein breites Anwendungsgebiet ab.

Im Rahmen einer Weiterbildung der erfindungsgemäßen Messeinheit ist vorgesehen, dass die Messeinheit dehnungsabhängige Widerstände, insbesondere Dehnungsmessstreifen oder Dünnfilmwiderstände, umfasst, um die Änderung des Dehnungszustands sensortechnisch zu ermitteln. Weiterhin ist es besonders bevorzugt, wenn die dehnungsabhängigen Widerstände als eine Wheatstone-Brücke verschalten sind, um somit eine Verfälschung des Sensorausgangssignals bei einer Temperaturänderung zu vermeiden.

Zudem ist es besonders bevorzugt, wenn das erste und/oder das zweite sphärische Kraftrichtelement jeweils als eine erste und/oder zweite Kugelkopfscheibe ausgebildet ist. Von Vorteil ist in diesem Zusammenhang, dass sich das erste und/oder das zweite sphärische Kraftrichtelement jeweils durch ein Standard-Bauteil kostengünstig realisieren lassen.

Eine Weiterbildung der erfindungsgemäßen Messeinheit umfasst ferner ein Gleitlager, das so ausgebildet ist, dass die Zugmittel mittelbar über das Gleitlager mit dem Krafteintragsabschnitt, insbesondere dem ersten Kraftrichtelement, verbindbar und/oder koppelbar sind. Das Gleitlager bewirkt, dass im Messzustand Torsionskräfte, die durch das Festlegen der Zugmittel an der Messeinheit, insbesondere an dem ersten Kraftrichtelement, beispielsweise aufgrund zusätzlicher Fixiermittel, entstehen können, sich nicht negativ auf den Messabschnitt auswirken.

Zudem wird im Rahmen der vorliegenden Erfindung Schutz beansprucht für eine Intelligente Spannvorrichtung zum Einbringen einer zwischen Zugmitteln und Haltemitteln entlang einer axialen und/oder geradlinigen Richtung wirkenden Zugkraft, um ein Förderband oder eine Kette oder einen Riemen oder ein Seil zu spannen.

Eine solche intelligente Spannvorrichtung umfasst zunächst eine erfindungsgemäße Messeinheit, sowie die Zugmittel und die Haltemittel, wobei sich die erfindungsgemäße Messeinheit im Messzustand befindet und mit den Zugmitteln und den Haltemitteln in Wirkkontakt steht und/oder starr gekoppelt ist.

Konkret umfasst die Spannvorrichtung zusätzliche Fixiermittel, die so ausgebildet sind, dass die Zugmittel mit dem ersten Kraftrichtelement und somit mit dem Krafteintragsabschnitt der erfindungsgemäßen Trägereinheit verbindbar sind, um die Zugkraft vom Zugmittel über die erfindungsgemäße Messeinheit auf die Haltemittel zu übertragen.

Ferner ist es in diesem Zusammenhang vorgesehen, dass die Haltemittel eine Krafteintragsfläche umfassen, auf der sich der Kraftabgabeabschnitt der erfindungsgemäßen Messeinheit und/oder Trägereinheit abstützt, wobei die Krafteintragsfläche um einen Toleranzwinkel α zu einer senkrecht zur axialen Richtung der Zugkraft verlaufenden Querebene verschwenkt verläuft.

Die intelligente Spannvorrichtung ist aufgrund der erfindungsgemäßen Messeinheit dazu ausgebildet, die erzeugte Zugkraft sensortechnisch zu erfassen. Anders ausgedrückt, die Spannvorrichtung wird im Rahmen der vorliegenden Erfindung als intelligent bezeichnet, da eine Zugkraft zwischen den Zugmitteln und den Haltemitteln nicht nur erzeugt, sondern mittels der erfindungsgemäßen Messeinheit auch gemessen und durch das Sensorausgangssignal ausgegeben werden kann.

Eine Weiterbildung der erfindungsgemäßen Spannvorrichtung sieht vor, dass die Zugmittel als eine Gewindestange oder eine Schraube ausgebildet sind. Ferner ist es in diesem Zusammenhang besonders bevorzugt, wenn das Zugmittel dazu dient, ein Förderband oder ein Riemen oder eine Kette oder ein Seil zu spannen. Die Gewindestange oder die Schraube umfasst insbesondere ein M16-Gewinde oder kleiner.

Ferner ist es bei einer bevorzugten Ausgestaltung der erfindungsgemäßen Spannvorrichtung vorgesehen, dass die Fixiermittel als eine Mutter ausgebildet sind.

Weiterhin umfasst die erfindungsgemäße intelligente Spannvorrichtung bevorzugt ein Gleitlager, das zwischen den Fixiermitteln und dem ersten Kraftrichtelement angeordnet ist, um im Messabschnitt einen Krafteintrag durch eine Torsionskraft, die beim Festlegen und/oder Spannen oder Lösen und/oder Entspannen der Fixiermittel, insbesondere zwischen den Zugmitteln und der erfindungsgemäßen Messeinheit, entsteht, zu vermeiden.

Ferner wird Schutz beansprucht für ein Verteil- und/oder Produktionszentrum für Waren, insbesondere Warensendungen oder Erzeugnisse, mit wenigstens einer Förderband-Anlage, wobei die wenigstens eine Förderband-Anlage ein Förderband zum Fördern der Warensendungen und wenigstens eine erfindungsgemäße Spannvorrichtung zum Spannen des Förderbands umfasst, wobei es vorgesehen ist, dass das wenigstens eine Ausgangssignale der erfindungsgemäßen Messeinheit, die von der erfindungsgemäßen Spannvorrichtung umfasst ist, an eine vom Verteilzentrum umfasste Überwachungseinheit übertragbar ist und insbesondere überwachbar ist, um beim Erreichen einer minimalen Zugkraft einen Servicetermin zum Nachstellen der Spannvorrichtung, um das Förderband zu spannen, einzuplanen.

Schließlich wird im Rahmen der vorliegenden Erfindung auch Schutz beansprucht für die Verwendung wenigstens einer erfindungsgemäßen intelligenten Spannvorrichtung zum Spannen eines Förderbandes, das von einer Förderband-Anlage umfasst ist.

Bevorzugt ist die Förderband-Anlage eine von mehreren Förderband-Anlagen, die von einem Verteilzentrum für Warensendungen umfasst sind. Es ist nun vorgesehen, das sämtliche Ausgangssignale der erfindungsgemäßen Messeinheiten, die von den erfindungsgemäßen Spannvorrichtungen umfasst sind, an eine vom Verteilzentrum umfasste Überwachungseinheit übertragbar sind. Die Überwachungseinheit ist insbesondere so ausgebildet, dass die Ausgangssignale auf einen zulässigen Zugkraftbereich überwachbar sind, um beim Erreichen einer minimalen Zugkraft einen Servicetermin zum Nachstellen der Spannvorrichtung, um das entsprechende Förderband nachzuspannen, einzuplanen

Im Folgenden ist die Erfindung beispielhaft mit Bezug auf Zeichnungen näher erläutert. Die bei den gezeigten Ausführungsformen exemplarisch dargestellte Merkmalskombination kann nach Maßgabe der obigen Ausführungen entsprechend den für einen bestimmten Anwendungsfall notwendigen Eigenschaften der erfindungsgemäßen Messeinheit durch weitere Merkmale ergänzt werden. Auch können, ebenfalls nach Maßgabe der obigen Ausführungen, einzelne Merkmale bei den beschriebenen Ausführungsformen weggelassen werden, wenn es auf die Wirkung dieses Merkmals in einem konkreten Anwendungsfall nicht ankommt.

In den Zeichnungen sind Elemente gleicher Funktion und/oder gleichen Aufbaus mit demselben Bezugszeichen bezeichnet.

Es zeigen:
- Fig. 1:: eine schematische Darstellung einer erfindungsgemäßen Messeinheit in einem Grundzustand gemäß einer ersten beispielhaften Ausführungsform;
- Fig 2:: eine schematische Darstellung der bekannten Messeinheit gemäß der ersten beispielhaften Ausführungsform in einem Messzustand, wobei die erfindungsgemäße Messeinheit von einer intelligenten Spannvorrichtung umfasst ist;
- Fig. 3:: eine schematische Darstellung einer erfindungsgemäßen Messeinheit in einem Messzustand gemäß einer zweiten beispielhaften Ausführungsform; und
- Fig. 4:: eine schematische Darstellung eines Verteilzentrums mit Förderband-Anlagen, die jeweils wenigstens eine erfindungsgemäße Spannvorrichtung im Messzustand umfassen.

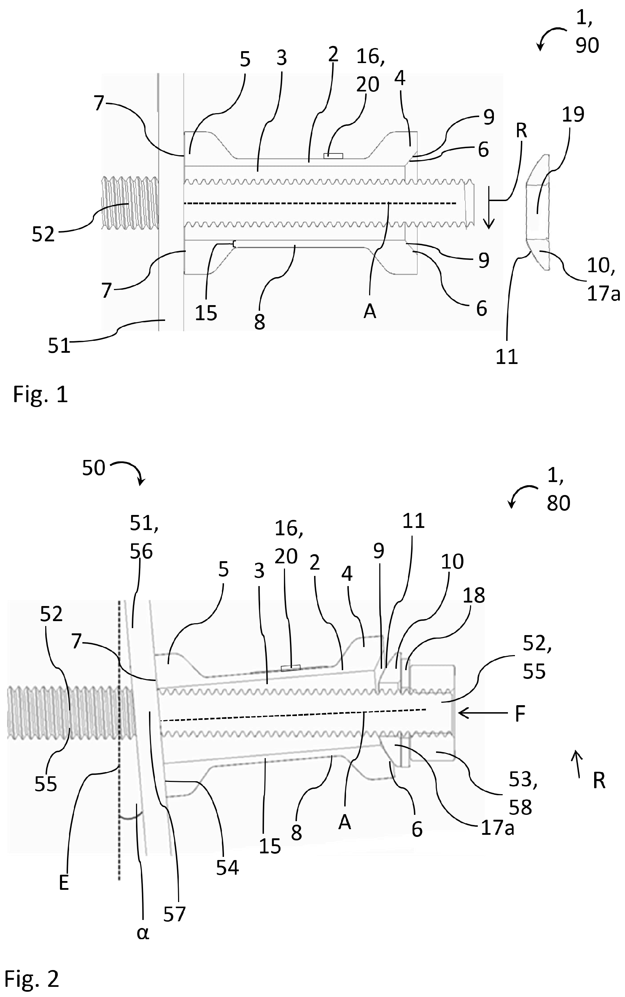

Die **Fig. 1** zeigt eine erfindungsgemäße Messeinheit 1 gemäß einem ersten Ausführungsbeispiel in einem freien und/oder entspannten und/oder nicht kraftbeaufschlagten Grundzustand 90 in einer Längsschnitt-Ansicht.

Die erfindungsgemäße Messeinheit 1 ist dazu ausgebildet, in einem Messzustand 80, der beispielsweise in der Fig. 2 dargestellt ist, eine Zugkraft zu erfassen, wobei die Zugkraft zwischen länglichen Zugmitteln 52 und Haltemitteln 51 wirkt.

Die erfindungsgemäße Messeinheit 1 umfasst eine rohrförmige Trägereinheit 2, die sich zwischen einem ersten Ende 4 und einem zweiten Ende 5 erstreckt.

Ferner umfasst die erfindungsgemäße Trägereinheit 2 eine kreisförmige Innenbohrung 3, die die Trägereinheit 2 hinsichtlich ihrer Längserstreckung vollständig durchsetzt oder - anders ausgedrückt - zwischen dem ersten Ende 4 und dem zweiten Ende 5 ausgebildet ist.

Die Innenbohrung 3, die einen kreisförmigen Querschnitt umfasst, ist geradlinig ausgebildet und erstreckt sich entlang einer axialen Achse A und ist bezüglich ihres inneren Durchmessers so dimensioniert, dass die Zugmittel 52 spielbehaftet und somit nicht spielfrei innerhalb der Innenbohrung 3 positionierbar sind.

Dies bedeutet, dass zwischen den Zugmitteln 52 und der Innenbohrung 3 ein Mindestabstand eingehalten wird und es somit nicht zu einer mechanischen Kontaktierung zwischen der Innenbohrung 3 und den Zugmitteln 52 kommt.

Ferner umfasst die erfindungsgemäße Trägereinheit 2 einen Krafteintragsabschnitt 6, der am ersten Ende 4 ausgebildet ist, um im Messzustand 80 die Zugkraft der Zugmittel 52 in die Trägereinheit 2 mittelbar einzukoppeln.

Ferner umfasst die erfindungsgemäße Trägereinheit 2 einen Kraftabgabeabschnitt 7, der am zweiten Ende 5 ausgebildet ist, um im Messzustand 80 die Zugkraft von der Trägereinheit 2 auf die Haltemittel 51 mittelbar oder unmittelbar zu übertragen.

Weiterhin umfasst die erfindungsgemäße Trägereinheit 2 einen Messabschnitt 8, der zwischen dem Krafteintragsabschnitt 6 und dem Kraftabgabeabschnitt 7 ausgebildet ist, um im Messzustand 80 die Zugkraft sensortechnisch zu erfassen.

Konkret ist der Messabschnitt 8 entlang der axialen Achse A in Folge einer Kraftbeaufschlagung elastisch verformbar ausgebildet, wobei eine Änderung des Dehnungszustands des Messabschnitts 8 sensortechnisch erfassbar und durch ein Sensorausgangssignal zum Abbilden der Zugkraft darstellbar ist.

Zudem geht aus der Schnittdarstellung hervor, dass die erfindungsgemäße Trägereinheit 2 einen ersten Konusabschnitt 9 umfasst, der die Innenbohrung 3 am ersten Ende 4 aufweitet und zur kraft- und/oder formschlüssigen Aufnahme eines ersten sphärischen Kraftrichtelements 10 ausgebildet ist, um das Zugmittel 52 über nicht dargestellte Fixiermittel 52 mit der erfindungsgemäßen Messeinheit 1 starr zu verbinden.

Das erfindungsgemäße erste Kraftrichtelement 10 ist als ein separates Bauteil lösbar zur Trägereinheit 2 ausgebildet und es umfasst einen sphärischen Kontaktbereich 11. Ferner ist das erste Kraftrichtelement 10 so ausgebildet, dass im Messzustand 80 die Zugkraft von den Zugmitteln 52 auf das erste Kraftrichtelement 10 und über den Kontaktbereich 11 des ersten Kraftrichtelements 10 in den Konusabschnitt 9 einkoppelbar ist, um die Trägereinheit 2 hinsichtlich der Haltemittel 51 auszurichten. Das Kraftrichtelement 10 umfasst ferner eine Ausnehmung 19 mit kreisrundem Innenquerschnitt, um die Zugmittel 52 aufzunehmen.

Das erste Kraftrichtelement 10 stellt somit ein erstes Bindeglied zwischen der erfindungsgemäßen Messeinheit 1 und einem externen Körper, nämlich den Zugmitteln 52, dar, um die Zugkraft in die erfindungsgemäße Messeinheit 1 einzukoppeln.

Der Kraftabgabeabschnitt 7 stellt vorliegend ein zweites Bindeglied zwischen der erfindungsgemäßen Messeinheit 1 und einem externen Körper, nämlich den Haltemitteln 51, dar, um die Zugkraft von der erfindungsgemäßen Messeinheit 1 auf die Haltemittel zu übertragen.

Im vorliegenden Ausführungsbeispiel ist das erste sphärische Kraftrichtelement 10 als eine Kugelkopfscheibe 17a ausgebildet.

Ferner geht aus der Schnitt-Ansicht hervor, dass der Messabschnitt 8 im Vergleich zu dem Krafteintragsabschnitt 6 und/oder dem Kraftabgabeabschnitt 7 eine reduzierte Wandstärke 15 und damit eine reduzierte Dicke der Trägereinheit 2 aufweist.

Die Erstreckung der Wandstärke im Messabschnitt 8 wird bei der hier vorliegenden erfindungsgemäßen Messeinheit 1 in Abhängigkeit eines von der jeweiligen Anwendung abhängigen Kraftmessbereichs der Zugkraft bestimmt. Die erfindungsgemäße Messeinheit 1 lässt sich somit gezielt an unterschiedliche Anwendungen anpassen.

Es wird noch darauf hingewiesen, dass die Wandstärke 15 der Trägereinheit 2 senkrecht zur Innenbohrung 3 und/oder axialen Achse A und/oder entlang einer radialen Richtung R der rohrförmigen Trägereinheit 2 verläuft.

Bei einer Kraftbeaufschlagung der erfindungsgemäßen Messeinheit 1 kommt es im Messabschnitt 8 aufgrund der reduzierten Wandstärke zu einer elastischen Verformung, die sich sensortechnisch erfassen lässt, um die zwischen den Zugmitteln 52 und den Haltemitteln 51 wirkende Zugkraft zu ermitteln.

Zum sensortechnischen Erfassen dieser elastischen Verformung umfasst die Messeinheit 2 dehnungsabhängige Widerstände 16, die vorliegend durch mehrere Dehnungsmessstreifen 20 ausgebildet sind. Mehrere dieser Dehnungsmessstreifen 20 sind zu einer Wheatstone-Brücke verschalten, um die Zugkraft mittelbar durch das Auswerten einer Messpannung messtechnisch zu erfassen. Durch eine solche Verschaltung mehrerer Dehnungsmessstreifen 20 wird der Einfluss einer temporären Temperaturänderung, die sich bereichsweise auch auf den Dehnungszustand des Messabschnitts 8 auswirkt, reduziert.

Die **Fig. 2** zeigt die bereits aus der **Fig. 1** bekannte erfindungsgemäße Messeinheit 1 gemäß dem ersten Ausführungsbeispiel in dem bereits erwähnten Messzustand 80. Für Bezugsziffern, die im Folgenden nicht erläutert werden, gelten daher die Ausführungen von oben.

Im Messzustand 80 ist die erfindungsgemäße Messeinheit 1 dazu eingerichtet, eine Zugkraft entlang einer axialen Richtung F zwischen den Zugmitteln 52 und den Haltemitteln 51 zu erfassen.

Die Zugmittel 52 sind vorliegend durch eine Gewindestange 55 und die Haltemittel 51 sind durch ein starres Blech 56 ausgebildet.

Die Gewindestange 55 durchdringt das Blech 56 hinsichtlich einer Quererstreckung vollständig. Das Blech 56 umfasst hierfür eine Aussparung 57, die so dimensioniert ist, dass die Gewindestange 55 lösbar und/oder spielbehaftet innerhalb der Aussparung 57 angeordnet werden kann.

Das Blech 56 bildet auf der der Messeinheit 1 zugewandten Seite eine Krafteintragsfläche 54 für die erfindungsgemäße Messeinheit 1, genauer für den Kraftabgabeabschnitt 7 der erfindungsgemäßen Messeinheit 1, aus.

Ferner wird darauf hingewiesen, dass zwischen dem Blech 56 und einer Vertikalebene E ein Toleranzwinkel α von 5° besteht. Die Zugkraft ist dagegen horizontal ausgerichtet. Aufgrund des erfindungsgemäßen Konusabschnitts 9 wird dieser Toleranzwinkel α ausgeglichen, so dass der Einfluss von Querkräften, die sich negativ auf das erzeugte Sensorausgangssignal zum Abbilden der Zugkraft auswirken, minimiert werden kann.

Die Gewindestange 55 steht über Fixiermittel 53, die vorliegend als eine Mutter 58 ausgebildet sind, einem Gleitlager 18 sowie dem ersten Kraftrichtelement 10 mit dem Krafteintragsabschnitt 6 der erfindungsgemäßen Messeinheit 1 in Wirkkontakt.

Durch das Anziehen der Mutter 58 wird die Gewindestange 55 über die erfindungsgemäße Messeinheit 1 zum Blech 56 verspannt, um die Zugkraft zwischen der Gewindestange 55 und dem Halteblech 56 zu erzeugen.

Das Gleitlager 18, das zwischen der Mutter 58 und der ersten Kugelkopfscheibe 17a ausgebildet ist, bewirkt, dass Torsionskräfte, die beim Anziehen der Mutter 58 in die Messeinheit 1 einkoppeln würden, vollständig vermieden werden können.

Durch das Verspannen der Mutter 53 wird die Zugkraft zwischen dem Haltemittel 51 und der Gewindestange 55 erzeugt, um somit das Förderband einer nicht dargestellten Förderband-Anlage über die Gewindestange 55 zu spannen.

Auf erfindungsgemäß vorteilhafter Weise lässt sich somit eine intelligente Spannvorrichtung 50 bereitstellen, um zwischen den Zugmitteln 52 und den Haltemitteln 51 eine Zugkraft zu erzeugen, die sensortechnisch mittels der erfindungsgemäßen Messeinheit 1 erfasst und über das Sensorausgangssignal abgebildet werden kann.

Von Vorteil ist in diesem Zusammenhang auch, dass die erfindungsgemäße Messeinheit über eine geringe radiale Erstreckung verfügt, so dass bestehende Spannvorrichtungen durch eine nachträgliche Aufnahme der erfindungsgemäßen Messeinheit umrüstbar sind.

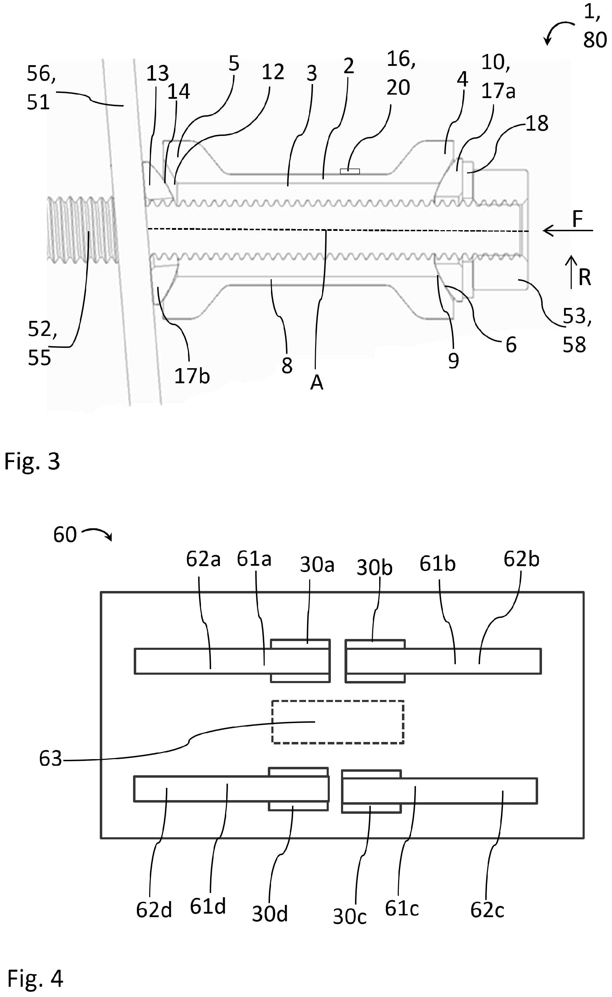

Die **Fig. 3** zeigt eine erfindungsgemäße Messeinheit 1 gemäß einem zweiten Ausführungsbeispiel.

Um Wiederholungen zu vermeiden, werden im Folgenden nur Unterschiede der zweiten Ausführungsvariante zu der ersten Ausführungsvariante erläutert. Für Bezugsziffern, die im Folgenden nicht erläutert sind, gelten somit die Ausführungen gemäß der **Figuren 1 und 2****.**

Die erfindungsgemäße Messeinheit 1 gemäß der zweiten Ausführungsvariante umfasst am zweiten Ende 5 einen zusätzlichen Konusabschnitt 12, der die Innenbohrung 3 endseitig aufweitet. Entsprechend dem ersten Konusabschnitt 9, der am ersten Ende 4 ausgebildet ist, ist auch der zweite Konusabschnitt 12 zur kraft- und/oder formschlüssigen Aufnahme eines Kraftrichtelements, konkret eines zweiten sphärischen Kraftrichtelements 13, ausgebildet.

Das zweite sphärische Kraftrichtelement 13 ist in Übereinstimmung zum ersten Kraftrichtelement 10 als separates Bauteil und damit zur Trägereinheit 2 lösbar ausgebildet.

Das zweite sphärische Kraftrichtelement 13 umfasst einen sphärischen Kontaktbereich 14. Ferner ist das zweite Kraftrichtelement 13 so ausgebildet, dass im Messzustand 80 die Zugkraft von der Trägereinheit 2 auf die Haltemittel 51, also vorliegend das Halteblech 56, übertragbar ist.

Wie bereits beim ersten sphärischen Kraftrichtelement 10 erwähnt, ist vorliegend auch das zweite sphärischen Kraftrichtelement 13 als eine zweite Kugelkopfscheibe 17b ausgebildet.

Aufgrund des Zusammenspiels zwischen dem zweiten Konusabschnitt 12 und dem zweiten sphärischen Kraftrichtelements 13 wird erzielt, dass die Trägereinheit 2 entlang der axialen Richtung der Zugkraft F ausgerichtet ist. Anders ausgedrückt, die Messeinheit 1 gemäß dem zweiten Ausführungsbeispiel ist im Messzustand 80 so relativ zu den Zugmitteln 52 ausgerichtet, dass die Innenbohrung 3 und/oder die axiale Achse A parallel zur axialen Richtung F der Zugkraft verlaufen. Auf vorteilhafte Weise kann somit die Messung der Zugkraft weiter verbessert werden.

Das erste Kraftrichtelement 10 stellt somit ein erstes Bindeglied zwischen der erfindungsgemäßen Messeinheit 1 und einem externen Körper, nämlich den Zugmitteln 52, dar, um die Zugkraft in die erfindungsgemäße Messeinheit 1 einzukoppeln.

Das zweite Kraftrichtelement 13 stellt vorliegend ein zweites Bindeglied zwischen der erfindungsgemäßen Messeinheit 1 und einem externen Körper, nämlich den Haltemitteln 51, dar, um die Zugkraft von der erfindungsgemäßen Messeinheit 1 auf die Haltemittel zu übertragen.

Die **Fig. 4** zeigt in stark schematisierter Form ein Verteilzentrum 60.

Das Verteilzentrum 60 ist für die Sortierung und den Transport von Waren ausgebildet und umfasst vier Förderband-Anlagen 62a-d mit jeweils einem Förderband 61a-d zur Aufnahme und zum translatorischen Transport der Waren entlang unterschiedlicher Förderwege.

Die Förderband-Anlagen 62a-d umfassen zudem jeweils wenigstens eine erfindungsgemäße Spannvorrichtung 30a-d, um das jeweilige Förderband mit einer Zugkraft zu spannen.

Zudem umfasst das Verteilzentrum 60 eine Überwachungseinheit 63, die mit der erfindungsgemäßen Spannvorrichtung 30a-d kommunikativ in Wirkverbindung steht, um von den einzelnen Spannvorrichtungen 30a-d das jeweilige Sensorausgangssignal zum Abbilden der jeweiligen Zugkraft zu erhalten.

Auf erfindungsgemäß vorteilhafter Weise kann somit ein kontinuierlicher Abfall der Zugkraft erkannt werden, um beim Erreichen eines Mindestwert einen Servicetermin einzuplanen, um das jeweilige Förderband 61a-d über die erfindungsgemäße Spannvorrichtung 30a-d nachzuspannen.

Im Ergebnis verbessert die erfindungsgemäße Messeinheit 1 und/oder die erfindungsgemäße Spannvorrichtung das Erfassen und/oder Überwachen von Zugkräften auf überraschend einfache Art und Weise.

## Patentansprüche

1. Messeinheit (1) zum Messen einer Zugkraft, die entlang einer axialen Richtung (F) zwischen Zugmitteln (52) und Haltemitteln (51) wirkt, mit
- einer rohrförmigen Trägereinheit (2), aufweisend
∘ eine Innenbohrung (3), die sich von einem ersten Ende (4) der Trägereinheit zu einem zweiten Ende der Trägereinheit (2) entlang einer axialen Achse (A) erstreckt und die so dimensioniert ist, dass in einem Messzustand (80) die Zugmittel (52) innerhalb der Innenbohrung (3) spielbehaftet aufnehmbar sind,
∘ einen am ersten Ende (4) ausgebildeten Krafteintragsabschnitt (6), der so ausgebildet ist, dass im Messzustand (80) die Zugkraft der Zugmittel (52) in die Trägereinheit (2) einkoppelbar ist,
∘ einen am zweiten Ende (5) ausgebildeten Kraftabgabeabschnitt (7), der so ausgebildet ist, dass im Messzustand (80) die Zugkraft von der Trägereinheit (2) auf die Haltemittel (51) übertragbar ist,
∘ einen zwischen dem Krafteintragsabschnitt (6) und dem Kraftabgabeabschnitt (7) ausgebildeten Messabschnitt (8), der entlang der axialen Achse (A) elastisch verformbar ausgebildet ist, derart, dass eine Änderung eines Dehnungszustands des Messabschnitts (8) längs der axialen Achse (A) durch ein Sensorausgangssignal zum Abbilden der Zugkraft darstellbar ist,
∘ einen ersten Konusabschnitt (9), der die Innenbohrung (3) am ersten Ende (4) aufweitet und zur kraft- und/oder formschlüssigen Aufnahme eines ersten sphärischen Kraftrichtelements (10) ausgebildet ist, sowie
- dem ersten Kraftrichtelement (10), das zur Trägereinheit (2) lösbar ausgebildet ist und einen sphärischen Kontaktbereich (11) umfasst, wobei das erste Kraftrichtelement (10) so ausgebildet ist, dass im Messzustand (80) die Zugkraft der Zugmittel (52) über den Kontaktbereich (11) in den Konusabschnitt (9) längs zur axialen Achse (A) einkoppelbar ist, um die Trägereinheit (2) hinsichtlich der Haltemittel (51) auszurichten.

2. Messeinheit nach Anspruch 1, >
**dadurch gekennzeichnet,**
**dass** die Trägereinheit (2) einen zweiten Konusabschnitt (12) umfasst, der die Innenbohrung (3) am zweiten Ende (5) aufweitet und zur kraft- und/oder formschlüssigen Aufnahme eines zweiten sphärischen Kraftrichtelements (13) ausgebildet ist, und
**dass** die Messeinheit (1) das zweite Kraftrichtelement (13) umfasst, das zur Trägereinheit (2) lösbar ausgebildet ist und einen zweiten sphärischen Kontaktbereich (14) umfasst, wobei das zweite Kraftrichtelement (13) so ausgebildet ist, dass im Messzustand (80) die Zugkraft (F) von der Trägereinheit (2) auf die Haltemittel (51) übertragbar ist, um die axiale Achse der Trägereinheit (2) entlang der axialen Richtung der Zugkraft auszurichten.

3. Messeinheit nach Anspruch 1 oder 2
**dadurch gekennzeichnet,**
**dass** der Messabschnitt (8) im Vergleich zu dem Krafteintragsabschnitt (6) und/oder dem Kraftabgabeabschnitt (7) eine reduzierte Wandstärke (15) aufweist, wobei die Wandstärke (15) der Trägereinheit (2) senkrecht zur axialen Richtung und/oder entlang einer radialen Richtung der rohrförmigen Trägereinheit (2) ausgerichtet ist und die Wandstärke (15) im Messabschnitt (8) insbesondere in Abhängigkeit eines Kraftmessbereichs der Zugkraft dimensioniert ist.

4. Messeinheit nach einem der vorgenannten Ansprüche,
**dadurch gekennzeichnet,**
**dass** die Messeinheit (2) dehnungsabhängige Widerstände (16), insbesondere Dehnungsmessstreifen (20) oder Dünnfilmwiderstände, umfasst, um die Änderung des Dehnungszustands sensortechnisch zu ermitteln, wobei die dehnungsabhängigen Widerstände (16) insbesondere als eine Wheatstone-Brücke verschalten sind.

5. Messeinheit nach einem der vorgenannten Ansprüche,
**dadurch gekennzeichnet,**
**dass** das erste und/oder das zweite sphärische Kraftrichtelement (10/13) jeweils als eine erste und/oder zweite Kugelkopfscheibe (17a/b) ausgebildet ist.

6. Messeinheit nach einem der vorgenannten Ansprüche,
**dadurch gekennzeichnet,**
**dass** die Messeinheit (2) ein Gleitlager (18) umfasst, das so ausgebildet ist, dass die Zugmittel (52) mittelbar über das Gleitlager (18) mit dem Krafteintragsabschnitt (6), insbesondere mit dem ersten Kraftrichtelement, verbindbar ist, um im Messzustand (80) Torsionskräfte im Messabschnitt (8) zu vermeiden.

7. Intelligente Spannvorrichtung (50, 30a-d) zum Einbringen einer zwischen Zugmitteln (52) und Haltemitteln (51) entlang einer axialen Richtung (R) wirkenden Zugkraft, um ein Förderband oder eine Kette oder einen Riemen oder ein Seil zu spannen, umfassend
- eine Messeinheit (1) im Messzustand (80), die nach einem der Ansprüche 1 bis 5 ausgebildet ist,
- die Zugmittel (52) sowie
- die Haltemittel (51),
wobei die Zugmittel (52) über Fixiermittel (53) mit dem Krafteintragsabschnitt (6) kraftschlüssig verbunden sind und
die Haltemittel (51) eine Krafteintragsfläche (54) umfassen, auf der sich der Kraftabgabeabschnitt (7) abstützt, wobei die Krafteintragsfläche (54) um einen Toleranzwinkel (α) zu einer senkrecht zur axialen Richtung der Zugkraft (F) verlaufenden Bezugsebene verschwenkt verläuft.

8. Intelligente Spannvorrichtung nach Anspruch 7,
**dadurch gekennzeichnet,**
**dass** die Zugmittel (52) als eine Gewindestange (55) oder eine Schraube ausgebildet sind, wobei das Zugmittel (52) insbesondere zum Spannen eines Förderbands oder eines Riemens oder einer Kette oder eines Seils dienen.

9. Intelligente Spannvorrichtung nach Anspruch 8,
**dadurch gekennzeichnet,**
**dass** die Fixiermittel (53) als eine Mutter (56) ausgebildet sind.

10. Verteil- und/oder Produktionszentrum (60) für Waren mit wenigstens einer Förderband-Anlage (62a-d), wobei die wenigstens eine Förderband-Anlage (62a-d) ein Förderband (61a-d) zum Fördern der Waren und wenigstens eine intelligente Spannvorrichtung (30a-d) zum Spannen des Förderbands (61a-d) umfasst, wobei die intelligente Spannvorrichtung (30a-d) nach Anspruch 8 oder 9 ausgebildet ist,
**dadurch gekennzeichnet,**
**dass** das wenigstens eine Ausgangssignale der Messeinheit (1) an eine vom Verteilzentrum (60) umfasste Überwachungseinheit (63) übertragbar ist und insbesondere überwachbar ist, um beim Erreichen einer minimalen Zugkraft einen Servicetermin zum Einstellen der Spannvorrichtung (30a-d) auszulösen, um das Förderband (61a-d) zu spannen.
